(19) Europäisches Patentamt
European Patent Office
Office européen des brevets

(11) Veröffentlichungsnummer: **0 033 852**
**A1**

(12) # EUROPÄISCHE PATENTANMELDUNG

(21) Anmeldenummer: **81100262.5**

(22) Anmeldetag: **15.01.81**

(51) Int. Cl.³: **C 09 B 33/056**
// D06P1/06, C09D11/16,
D21H1/46, B27K5/02

(30) Priorität: **21.01.80 DE 3002062**

(43) Veröffentlichungstag der Anmeldung: **19.08.81**
**Patentblatt 81/33**

(84) Benannte Vertragsstaaten: **BE CH DE FR GB IT LI NL**

(71) Anmelder: **CASSELLA Aktiengesellschaft, Hanauer Landstrasse 526, D-6000 Frankfurt am Main 61 (DE)**

(72) Erfinder: **Bauer, Wolfgang, Dr., Masurenstrasse 6, D-6457 Maintal 3 (DE)**
Erfinder: **Ribka, Joachim, Dr., Rügener Strasse 4, D-6050 Offenbach(Main)-Bürgel (DE)**
Erfinder: **Gusko, Ilse-Christiane, Dörnigheimer Weg 26, D-6457 Maintal 2 (DE)**
Erfinder: **Möller, Klaus, Kallestrasse 8, D-6000 Frankfurt am Main 1 (DE)**

(74) Vertreter: **Urbach, Hans-Georg, Dr. et al, Hanauer Landstrasse 526, D-6000 Frankfurt am Main 61 (DE)**

(54) **Wasserlösliche Disazofarbstoffe, ihre Herstellung und Verwendung.**

(57) Die wasserlöslichen Diazofarbstoffe, die in Form der freien Säure der Formel I

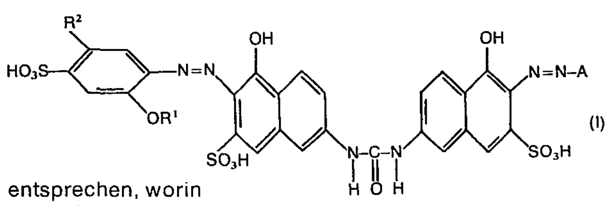

(I)

entsprechen, worin

$R^1$ = Methyl oder Ethyl,

$R^2$ = Methyl, Methoxy oder Ethoxy,

A den Rest einer Diazokomponente der Aminobenzol- oder 1- oder 2-Aminonaphthalin-Reihe

bedeuten, werden dadurch hergestellt, daß ein Gemisch von Diazokomponenten der Formeln IV und V

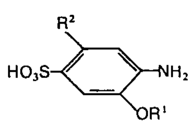

(IV) $A-NH_2$ (V)

im Molverhältnis IV:V = 1: (0 bis 19,5) diazotiert und das erhaltene Diazoniumkomponentengemisch im Molverhältnis 2:1 mit der Kupplungskomponente I-Säure-Harnstoff gekuppelt wird.

EP 0 033 852 A1

0033852
Ref. 3166
Dr.Eu/Jt

# Wasserlösliche Disazofarbstoffe, ihre Herstellung und Verwendung

Die vorliegende Erfindung betrifft wasserlösliche Disazofarbstoffe, die in Form der freien Säure der Formel I

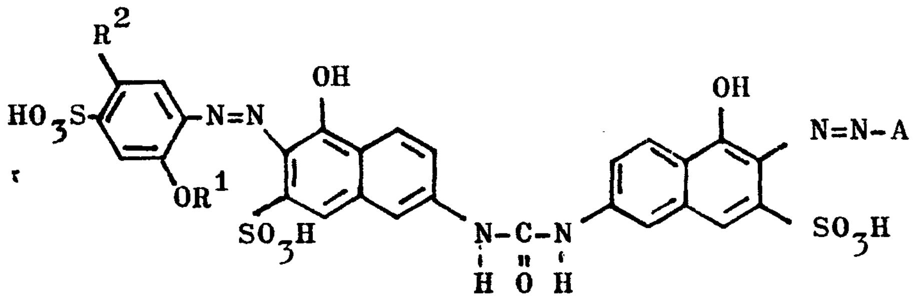

(I)

entsprechen, worin $R^1$ = Methyl oder Ethyl, $R^2$ = Methyl, Methoxy oder Ethoxy und A den Rest einer Diazokomponente der Aminobenzol- oder 1- oder 2-Aminonaphthalin-Reihe bedeuten, ein Verfahren zu ihrer Herstellung und ihre Verwendung.

Bevorzugte Reste A leiten sich von Diazokomponenten der 4-Aminobenzolsulfonsäure-Reihe der Formel II

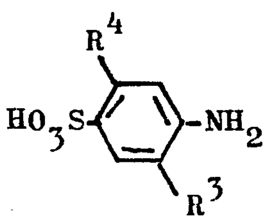

(II)

ab, worin $R^3$ und $R^4$ unabhängig voneinander Wasserstoff, Methyl, Ethyl, Methoxy, Ethoxy, Chlor oder Nitro bedeuten. Insbesondere bedeutet $R^3$ und/oder $R^4$ Wasserstoff, Methyl oder Methoxy.

Bevorzugte Reste A der 1- oder 2-Aminonaphthalin-Reihe leiten sich von Diazokomponenten der 1- oder 2-Aminonaphthalinmonosulfosäure-Reihe der Formel III

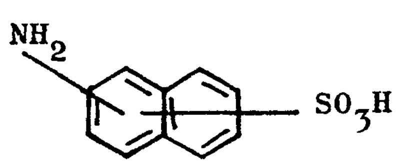

(III)

ab, worin der $SO_3H$-Substituent vorzugsweise in 2-, 4-, 5- oder 6-Stellung des 1- oder 2-Aminonaphthalin-Kerns steht.

Bevorzugte Disazofarbstoffe der Formel I sind solche, bei denen $R^1$ = Methyl und $R^2$ = Methyl oder Methoxy ist. Besonders bevorzugte Disazofarbstoffe der Formel I sind solche, welche die vorstehend angegebenen bevorzugten Bedeutungen für $R^1$ und $R^2$ besitzen und die zudem als Rest A einen Rest der Formel II, insbesondere mit den bevorzugten Bedeutungen für $R^3$ und/oder $R^4$ besitzen. Ganz besonders bevorzugte Farbstoffe der Formel I sind solche, bei denen der Rest $R^2$ mit dem Rest $R^4$ und der Rest $OR^1$ mit dem Rest $R^3$ identisch ist.

Die erfindungsgemäßen Disazofarbstoffe der Formel I können dadurch hergestellt werden, daß ein Gemisch von Diazokomponenten der Formeln IV und V

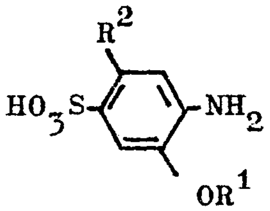 (IV)

A-$NH_2$ (V)

worin $R^1$, $R^2$ und A die bereits genannten Bedeutungen besitzen im Molverhältnis IV : V = 1 : (0 bis 19,5), insbesondere 1 : (0 bis 19), vorzugsweise 1 : (0 bis 1) diazotiert und das so erhaltene Diazoniumkomponentengemisch im Molverhältnis 2 : 1 mit der Kupplungskomponente I-Säure-Harnstoff der Formel VI

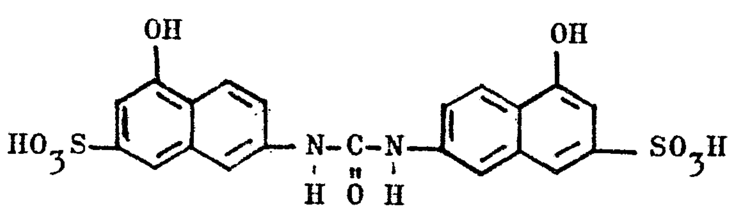 (VI)

gekuppelt wird. Hierbei werden im allgemeinen Farbstoffgemische erhalten, welche bei Molverhältnissen IV : V = 1 : (0 bis 1) die erfindungsgemäßen Farbstoffe als Hauptkomponente enthalten. Bei einem Molverhältnis IV : V = 1 : 0 werden die bevorzugten erfindungsgemäßen Farbstoffe in reiner Form erhalten.
Coloristisch sind auch Mischungen erfindungsgemäßer Farbstoffe der Formel I mit bekannten Farbstoffen interessant. Wegen der

hohen Farbstärke der erfindungsgemäßen Farbstoffe können derartige Mischungen erfindungsgemäße Farbstoffe bis herab zu 5 Gew.%, in manchen Fällen bis herab zu 3 Gew.% enthalten. Derartige Farbstoff-Mischungen können durch Vermischen der Einzelfarbstoffe, aber in geeigneten Fällen auch durch Mischkupplung hergestellt werden. Bei derartigen Mischkupplungen wird bei der im Molverhältnis 2 : 1 erfolgenden Kupplung des aus den Verbindungen IV und V hergestellten Diazoniumkomponentengemisches mit der Kupplungskomponente VI ein Diazoniumkomponentengemisch eingesetzt, das durch Diazotierung eines Gemisches von Diazokomponenten der Formel IV und V im Molverhältnis 1 : (1 bis 19,5), insbesondere 1 : (1 bis 19) erhalten worden ist.

Als Diazokomponenten der Formel IV werden bei der Herstellung der erfindungsgemäßen Farbstoffe beispielsweise eingesetzt: 1-Amino-2-methoxy-5-methylbenzol-4-sulfonsäure, 1-Amino-2,5-dimethoxybenzol-4-sulfonsäure, 1-Amino-2-ethoxy-5-methylbenzol-4-sulfonsäure, 1-Amino-2,5-diethoxybenzol-4-sulfonsäure.

Als Diazokomponenten der Formel V können beispielsweise eingesetzt werden: Anilin, 2-Methylanilin, 3-Methylanilin, 4-Methylanilin, 2-Methoxyanilin, 3-Methoxyanilin, 4-Methoxyanilin, 4-Chloranilin, Acetyl-p-phenylendiamin, 1-Aminonaphthalin, 1-Aminobenzol-3-sulfonsäure.

Bevorzugte Diazokomponenten der Formel II sind beispielsweise: 1-Aminobenzol-4-sulfonsäure, 1-Amino-2-methylbenzol-4-sulfonsäure, 1-Amino-2-chlorbenzol-4-sulfonsäure, 1-Amino-3-chlorbenzol-4-sulfonsäure, 1-Amino-2,5-dichlorbenzol-4-sulfonsäure, 1-Amino-2-nitrobenzol-4-sulfonsäure, 1-Amino-3-methoxybenzol-4-sulfonsäure, 1-Amino-3-ethoxybenzol-4-sulfonsäure, 1-Amino-2-methoxy-5-methylbenzol-4-sulfonsäure, 1-Amino-2,5-dimethoxybenzol-4-sulfonsäure, 1-Amino-2-ethoxy-5-methylbenzol-4-sulfonsäure, 1-Amino-2,5-diethoxybenzol-4-sulfonsäure.

0033852
Ref. 3166

Als Diazokomponenten der Formel III können beispielsweise eingesetzt werden: 1-Aminonaphthalin-4-sulfonsäure, 1-Aminonaphthalin-5-sulfonsäure, 2-Aminonaphthalin-1-sulfonsäure, 2-Aminonaphthalin-6-sulfonsäure.

Die Kupplung des Diazoniumkomponentengemisches mit der Kupplungskomponente der Formel VI wird im pH-Bereich 2 bis 12, vorzugsweise 4 bis 10, durchgeführt, wobei als Reaktionsmedium Wasser bevorzugt ist. Zur Beschleunigung der Kupplungsreaktionen können jedoch gegebenenfalls organische Verbindungen, wie ein- oder mehrwertige Alkohole, z.B. Methanol, Ethanol, Glykol, carbonylgruppenhaltige amidische Verbindungen, z.B. Dimethylformamid oder Dimethylacetamid, oder primäre, sekundäre bzw. tertiäre Amine, z.B. Triethylamin, Ethanolamin, zugegen sein.

Die erfindungsgemäßen Farbstoffe können als freie Säuren oder in Form ihrer Salze, insbesondere in Form ihrer Alkali- oder Ammoniumsalze eingesetzt werden. Als Alkalisalze werden z.B. die Lithium-, Natrium- und Kaliumsalze verwendet. Als Ammoniumkationen kommen vor allem auch organisch substituierte Ammoniumkationen, wie z.B. das Methyl-, Dimethyl-, Trimethyl-, Monoethanol-, Diethanol-ammoniumkation in Betracht. Erfindungsgemäße Farbstoffe in Salzform können auch verschiedene Kationen enthalten.

Die erfindungsgemäßen Disazofarbstoffe eignen sich hervorragend zum Färben und Bedrucken von hydroxylgruppenhaltigen und stickstoffhaltigen natürlichen oder synthetischen Fasermaterialien, wie Baumwolle, Regeneratcellulose, Polyamid, Seide, Wolle, Leder, insbesondere von Papier, Holz und als Schreibmittel. Das Färben und Bedrucken erfolgt nach den üblichen Verfahren. Auf den genannten Substraten, insbesondere auf Papier, erhält man brillante orange bis rote Färbungen bzw. Drucke guter Egalität, die sich durch eine überraschend hohe Farbstärke auszeichnen. Die neuen Disazofarbstoffe eignen

sich wegen ihrer überragenden Kaltwasserlöslichkeit vor allem zum Färben von ungeleimtem oder geleimtem Papier in der Masse oder nach dem Tauchverfahren. Die Papierfärbungen zeichnen sich neben guter Wasserechtheit, Zylinderechtheit, Ausblutechtheit, Säureechtheit, Alkaliechtheit auch durch Beständigkeit gegenüber Fruchtsäften, Milch sowie alkoholischen Getränken aus. Besonders vorteilhaft ist, daß aufgrund der hohen Substantivität der erfindungsgemäßen Disazofarbstoffe ökologisch günstige Färbereiabwässer anfallen.

Die erfindungsgemäßen Disazofarbstoffe können in Pulver- und Granulatform, jedoch aufgrund ihrer hervorragenden Wasserlöslichkeit auch in Form konzentrierter wässriger Lösungen zum Färben der genannten Substrate, insbesondere von Papier, eingesetzt werden. Die konzentrierten wässrigen Lösungen enthalten normalerweise 10-40 %, vorzugsweise 10-25 % Reinfarbstoff. Den konzentrierten Lösungen der erfindungsgemäßen Disazofarbstoffe können an sich bekannte hydrotrope Verbindungen aus der Reihe der hydrotropen Salze, der carbonylgruppenhaltigen amidischen Substanzen, der ein- oder mehrwertigen Alkohole oder der Amine zugesetzt werden. Hydrotrope Verbindungen der genannten Art sind beispielsweise beschrieben bei: H. Rath u. S. Müller, Melliand Textilberichte 40, 787 (1959); E.H. Daruwalla in K.Venkataraman "The Chemistry of Synthetic Dyes", Vol. VII, Seiten 86-92 (1974) und in der dort zitierten Literatur. In den konzentrierten Lösungen bzw. den Pulver- oder Granulatformen der erfindungsgemäßen Disazofarbstoffe können ferner an sich bekannte Hilfsmittel wie Tenside, die zur Verbesserung der Benetzbarkeit oder Löslichkeit von Direktfarbstoffen geeignet sind, zugegen sein. Als Tenside eignen sich Aniontenside, Amphotenside oder nicht ionogene Tenside, beispielsweise beschrieben in E.H. Daruwalla in K. Venkataraman "The Chemistry of Synthetic Dyes", Vol. VII, Seiten 86-92 (1974); Ullmanns Enzyklopädie der technischen Chemie 3. Auflage, Band 16 (1965) Seiten 724 bis 748; J.L. Moillet,

B. Collie und W. Black in "Surface Activity", 2. Auflage, Kap. 10 bis 15. Die Löslichkeit der bevorzugten Reihe der erfindungsgemäßen Farbstoffe ist überraschenderweise so gut, daß bei der Herstellung konzentrierter, lagerstabiler Lösungen auf den Zusatz von hydrotropen Verbindungen der o.a. Art sogar verzichtet werden kann, was aus ökologischen Gründen wegen der geringen Belastung von Färbereiabwässern mit organischen Substanzen besonders günstig ist.

Ferner weisen die erfindungsgemäßen Disazofarbstoffe gegenüber nächstvergleichbaren Farbstoffen, wie z.B. in der DE-OS 23 25 088, DE-AS 17 68 884, DE-OS 24 51 257 beschrieben sind, überraschende Vorteile auf, vor allem in der höheren Farbstärke, in der besseren Löslichkeit, größeren Lagerstabilität und geringeren Viskosität konzentrierter wässriger Lösungen vergleichbarer Konzentration.

In den folgenden Beispielen bedeuten Teile Gewichtsteile, Prozente Gewichtsprozente, die Temperaturen sind in Celsiusgraden angegeben.

## Beispiel 1

43,4 Teile 1-Amino-2-methoxy-5-methylbenzol-4-sulfonsäure werden in 300 Teilen Wasser eingetragen und mit 15 Teilen 10 N Natronlauge bei pH 7 gelöst. Anschließend setzt man eine Lösung von 14,8 Teilen Natriumnitrit in 40 Teilen Wasser zu und gibt die erhaltene Mischung zu einem Gemisch aus 60 Teilen 10 N Salzsäure, 350 Teilen Eis und 150 Teilen Wasser. Nach beendeter Diazotierung wird überschüssige salpetrige Säure mit Amidosulfonsäure entfernt. Die Suspension der Diazoverbindung läuft dann im Verlauf von ca. 15 Minuten zu einer Mischung von 54,8 Teilen I-Säure-Harnstoff-bis-Natriumsalz in 400 Teilen Wasser. Zur Vervollständigung der Kupplungsreaktion läßt man ca. 3 Stunden bei 20-30°C und pH 6-7 nachrühren und isoliert den Farbstoff der Formel

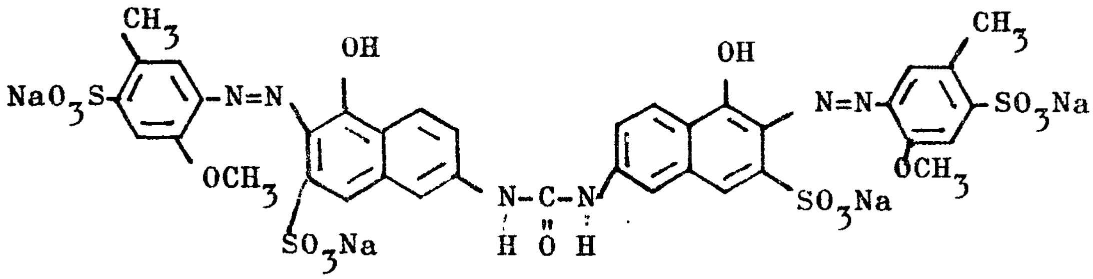

nach Zugabe von 200 Teilen Natriumchlorid.
Nach Trocknung der Farbstoffpaste bei ca. 80°C erhält man 201,6 g eines roten Pulvers, das eine hohe Wasserlöslichkeit aufweist und Papier in farbstarken, brillanten roten Farbtönen färbt.

Beispiel 2

43,4 Teile 1-Amino-2-methoxy-5-methylbenzol-4-sulfonsäure werden in 105 Teile Wasser eingetragen, mit 23 Teilen 10 N Salzsäure verrührt und nach Zusatz von 100 Teilen Eis mit einer Lösung von 14,8 Teilen Natriumnitrit in 30 Teilen Wasser versetzt. Man rührt ca. 1 Stunde bei 5-10°C nach und entfernt überschüssige salpetrige Säure mit Amidosulfonsäure. Anschliessend werden 54,8 Teile I-Säure-Harnstoff-bis-natriumsalz eingestreut und der pH-Wert des Kupplungsgemisches mit 26,4 Teilen Diethanolamin auf pH: 5 - 5,5 gestellt. Nach Verdünnen mit etwas Wasser erhält man 800 Teile einer roten Lösung des Farbstoffs der Formel

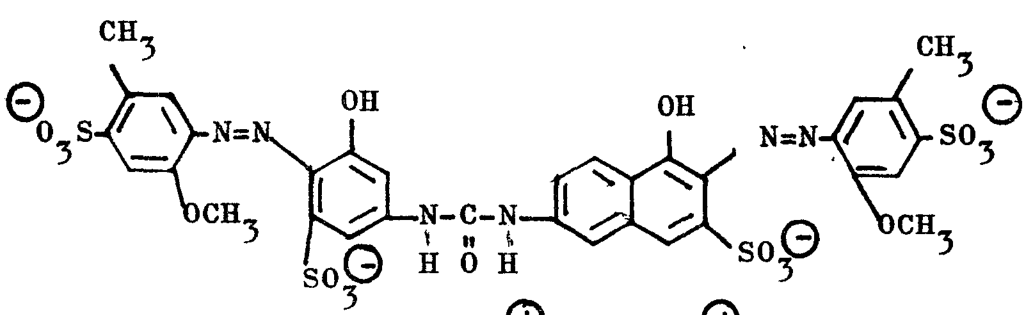

$2Na^{\oplus}$ ; $2\ H_2N^{\oplus} - (CH_2-CH_2-OH)_2$

die sich hervorragend zum Färben von Papier in der Masse in farbstarken, brillanten roten Farbtönen eignet.

Beispiel 3

Ein Gemisch von 43,4 Teilen 1-Amino-2-methoxy-5-methylbenzol-4-sulfonsäure und 54,8 Teilen I-Säure-Harnstoff-bis-natriumsalz werden bei 20°C in 500 Teilen Wasser verrührt und dann in ca. 30 Minuten mit einer Lösung von 14,1 Teilen Natriumnitrit in 40 Teilen Wasser versetzt. Man rührt ca. 5 Stunden nach und stellt dann durch Zufügen von Wasser ein Endgewicht von 1000 Teilen ein. Man erhält eine rote Lösung des Farbstoffes der Formel

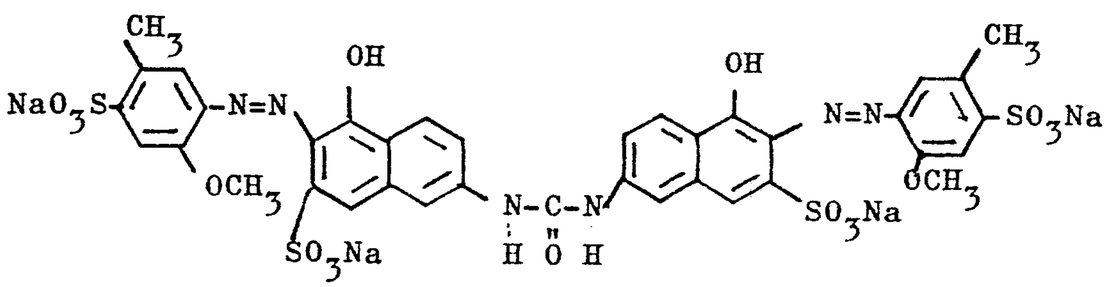

die sich sehr gut zum Färben von Papier in der Masse in brillanten roten Farbtönen hoher Farbstärke eignet.

Beispiel 4

Verfährt man nach den Angaben des Beispiels 3, setzt jedoch an Stelle von 43,4 Teilen 1-Amino-2-methoxy-5-methylbenzol-4-sulfonsäure 46,6 Teile 1-Amino-2,5-dimethoxybenzol-4-sulfonsäure ein, so erhält man 1000 Teile einer roten Lösung des Farbstoffs der Formel

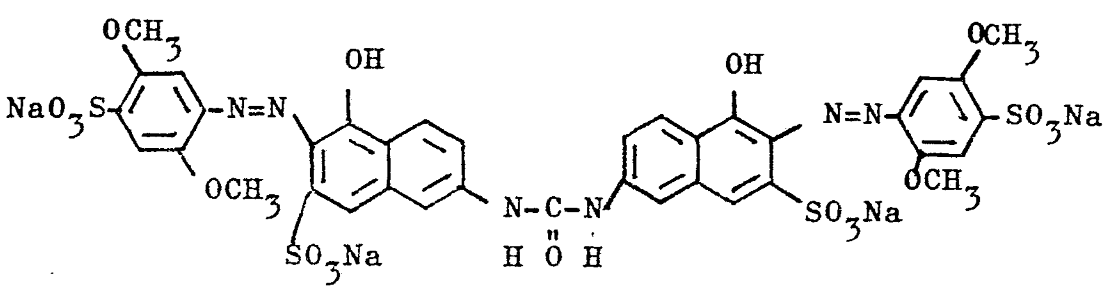

Setzt man diese Farbstofflösung zum Färben von Papier in der Masse ein, so erhält man brillante rote Färbungen hoher Farbstärke.

Beispiel 5

32,6 Teile 1-Amino-2-methoxy-5-methyl-benzol-4-sulfonsäure und 8,65 Teile 1-Aminobenzol-4-sulfonsäure werden zusammen mit 23 Teilen 10 N Salzsäure in 165 Teilen Wasser verrührt, mit 100 Teilen Eis versetzt und mit einer Lösung von 14,8 Teilen Natriumnitrit in 30 Teilen Wasser bei 5-10°C diazotiert. Nach Entfernen überschüssiger salpetriger Säure mit Amidosulfonsäure werden 54,8 Teile I-Säure-Harnstoff-bis-natriumsalz zugegeben und mit 26 Teilen Diethanolamin ein pH-Wert von 6 eingestellt. Nach Verdünnen mit wenig Wasser erhält man 700 g einer Farbstofflösung, welche die Farbstoffe der Formel

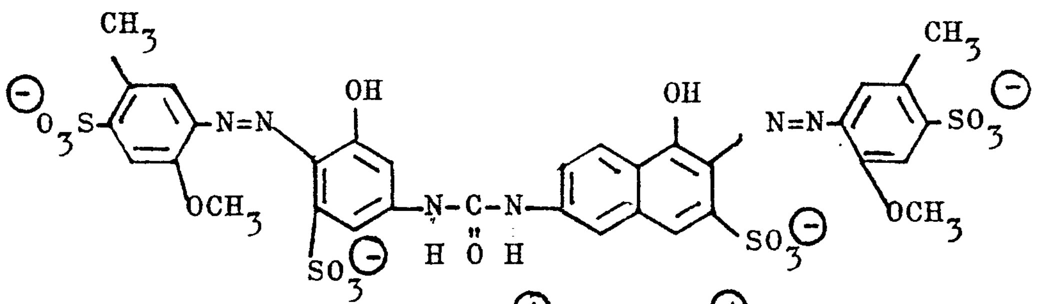

$2Na^{\oplus}$ ; $2\ H_2N^{\oplus} - (CH_2-CH_2-OH)_2$

und

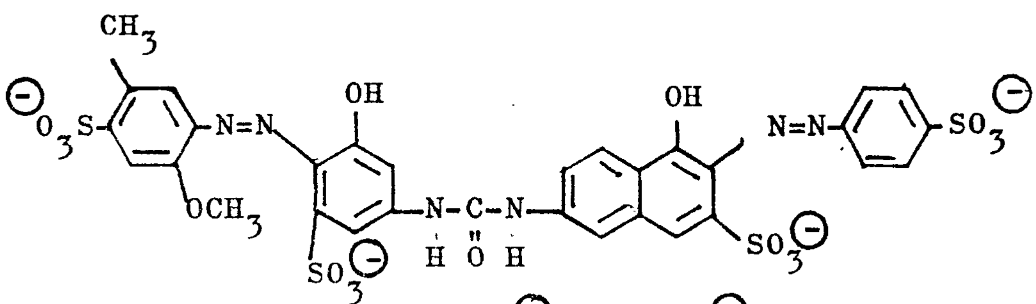

$2Na^{\oplus}$ ; $2\ H_2N^{\oplus} - (CH_2-CH_2-OH)_2$

im Verhältnis von etwa 1 : 1 enthält. Bei der Papiermassefärbung erhält man mit dieser Farbstofflösung brillante, gelbstichig rote Färbungen hoher Farbstärke.

Beispiel 6

Setzt man 2,2 Teile 1-Amino-2-methoxy-5-methyl-benzol-4-sulfonsäure und 32,9 Teile 1-Aminobenzol-4-sulfonsäure (Molverhältnis 1 : 19) ein und verfährt ansonsten nach den Angaben des Beispiels 5, so erhält man 700 Teile einer Farbstofflösung, die Papier in der Masse mit orangen, farbstarken Farbtönen färbt.

Beispiel 7

100 Teile 100 % gebleichter Sulfitzellstoff in 2000 Teilen Wasser werden in einem Holländer gemahlen. Zu der fein verteilten Sulfitzellstoffmasse gibt man 8 Teile der nach Beispiel 5 erhaltenen konzentrierten Farbstofflösung und mischt ca. 15 Minuten weiter. Der Papierstoff kann geleimt werden. Anschließend erfolgt die Papierherstellung. Man erhält auf ungeleimten oder geleimten Papieren eine brillante, gelbstichig rote Färbung, die eine hohe Farbstärke sowie gute Echtheitseigenschaften, insbesondere eine gute Lichtechtheit, gute Ausblutechtheit, gute Säure- und Alkaliechtheit sowie gute Wasser- und Alkoholechtheit aufweist. Das bei der Papiermassefärbung anfallende Abwasser ist ökologisch günstig.
Der folgenden Tabelle ist der strukturelle Aufbau weiterer erfindungsgemäßer Disazofarbstoffe der Formel I zu entnehmen, die entsprechend den Beispielen 1 bis 6 hergestellt werden können.
In der Tabelle ist angegeben:

In Spalte 1: die Diazokomponente der Formel IV
In Spalte 2: die Diazokomponente der Formel V
In Spalte 3: das Molverhältnis der Diazokomponente der Formel IV zur Diazokomponente der Formel V.

Die Farbstoffe der Beispiele 9 bis 24 ergeben auf Papier einen roten Farbton, der Farbstoff des Beispiels 8 ergibt auf Papier einen gelbstichig roten Farbton.

| Beispiel | Diazokomponente der Formel IV | Diazokomponente der Formel V | Molverhältnis IV : V |
|---|---|---|---|
| 8 | 1-Amino-2-methoxy-5-methylbenzol-4-sulfonsäure | 1-Amino-2-methyl-benzol-4-sulfon-säure | 1 : 0,333 |
| 9 | " | 1-Amino-2-chlor-benzol-4-sulfon-säure | 1 : 0,333 |
| 10 | " | 1-Amino-2-nitro-benzol-4-sulfon-säure | 1 : 0,333 |
| 11 | " | 1-Amino-3-methoxy-benzol-4-sulfon-säure | 1 : 0,25 |
| 12 | " | 1-Amino-3-ethoxy-benzol-4-sulfon-säure | 1 : 0,25 |
| 13 | " | 1-Amino-2,5-di-methoxy-benzol-4-sulfonsäure | 1 : 1 |
| 14 | " | 1-Aminonaphthalin-4-sulfonsäure | 1 : 0,333 |
| 15 | " | 1-Aminonaphthalin-5-sulfonsäure | 1 : 0,5 |
| 16 | " | 2-Aminonaphthalin-1-sulfonsäure | 1 : 0,143 |
| 17 | " | 2-Aminonaphthalin-6-sulfonsäure | 1 : 0,333 |
| 18 | 1-Amino-2,5-di-ethoxybenzol-4-sulfonsäure | 1-Aminobenzol-4-sulfonsäure | 1 : 0,5 |

| Beispiel | Diazokomponente der Formel IV | Diazokomponente der Formel V | Molverhältnis IV : V |
|---|---|---|---|
| 19 | 1-Amino-2-methoxy-5-methylbenzol-4-sulfonsäure | Anilin | 1 : 0,333 |
| 20 | " | 2-Methoxyanilin | 1 : 0,333 |
| 21 | " | 4-Methylanilin | 1 : 0,25 |
| 22 | " | 4-Chloranilin | 1 : 0,25 |
| 23 | " | Acetyl-p-phenylen-diamin | 1 : 0,2 |
| 24 | " | 3-Aminobenzol-sulfonsäure | 1 : 0,166 |

A n s p r ü c h e

1. Wasserlösliche Disazofarbstoffe, die in Form der freien Säure der Formel I

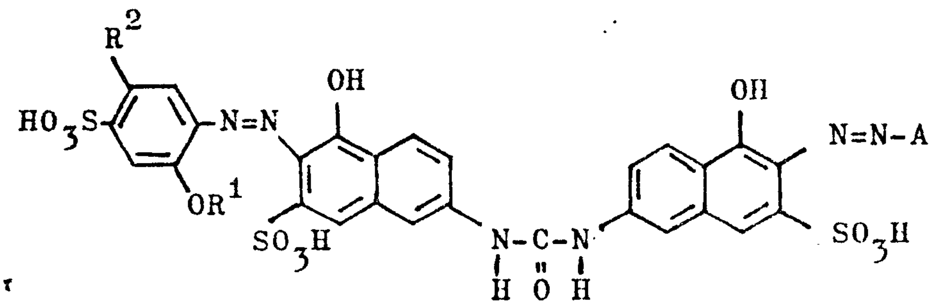

(I)

entsprechen, worin
$R^1$ = Methyl oder Ethyl,
$R^2$ = Methyl, Methoxy oder Ethoxy,
A den Rest einer Diazokomponente der Aminobenzol- oder 1- oder 2-Aminonaphthalin-Reihe

bedeuten.

2. Wasserlösliche Disazofarbstoffe nach Anspruch 1, dadurch gekennzeichnet, daß A den Rest einer Diazokomponente der Formel II

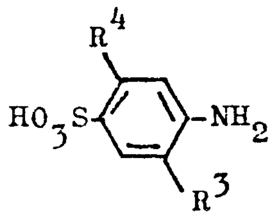

(II)

bedeutet, worin $R^3$ und $R^4$ unabhängig voneinander Wasserstoff, Methyl, Ethyl, Methoxy, Ethoxy, Chlor oder Nitro bedeuten.

3. Wasserlösliche Disazofarbstoffe nach Anspruch 1, dadurch gekennzeichnet, daß A den Rest einer Diazokomponente der 1- oder 2-Aminonaphthalinmonosulfosäure-Reihe der Formel III

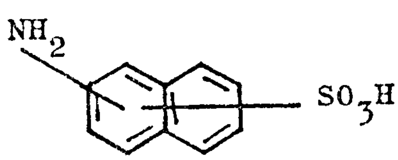

(III)

bedeutet.

0033852
Ref. 3166

4. Wasserlösliche Disazofarbstoffe nach Anspruch 3, dadurch gekennzeichnet, daß der $SO_3H$-Rest in 2-, 4-, 5- oder 6-Stellung des 1- oder 2-Aminonaphthalinkerns steht.

5. Wasserlösliche Disazofarbstoffe nach den Ansprüchen 1 bis 4, dadurch gekennzeichnet, daß $R^1$ = Methyl und $R^2$ = Methyl oder Methoxy bedeutet.

6. Wasserlösliche Disazofarbstoffe nach den Ansprüchen 2 und 5, dadurch gekennzeichnet, daß $R^3$ und/oder $R^4$ Wasserstoff, Methyl oder Methoxy bedeutet.

7. Wasserlösliche Disazofarbstoffe nach den Ansprüchen 1 und 2, dadurch gekennzeichnet, daß $R^2$ mit $R^4$ und $OR^1$ mit $R^3$ identisch sind.

8. Verfahren zur Herstellung der wasserlöslichen Disazofarbstoffe nach den Ansprüchen 1 bis 7, dadurch gekennzeichnet, daß ein Gemisch von Diazokomponenten der Formeln IV und V

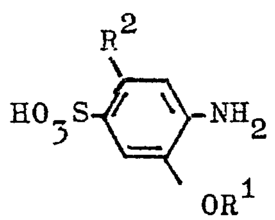 (IV)

$A - NH_2$ (V)

im Molverhältnis IV : V = 1 : (0 bis 19,5) diazotiert und das erhaltene Diazoniumkomponentengemisch im Molverhältnis 2 : 1 mit der Kupplungskomponente I-Säure-Harnstoff der Formel VI

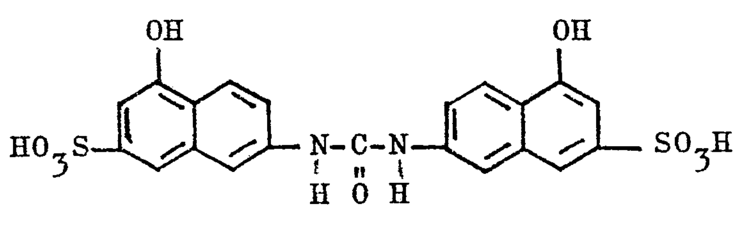

gekuppelt wird.

9. Verfahren nach Anspruch 8, dadurch gekennzeichnet, daß ein Diazokomponentengemisch mit einem Molverhältnis zwischen den Komponenten IV : V = 1 : (0 bis 1) verwendet wird.

10. Verwendung der Disazofarbstoffe der Ansprüche 1 bis 7 in Form ihrer Farbstoffpulver, Granulate oder in Form von konzentrierten wäßrigen Lösungen zum Färben und Bedrucken von hydroxylgruppenhaltigen und stickstoffhaltigen natürlichen oder synthetischen Fasermaterialien, von Papier, Holz und als Schreibmittel.

Europäisches Patentamt

# EUROPÄISCHER RECHERCHENBERICHT

0033852

Nummer der Anmeldung
EP 81 10 0262

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 103 756 (SANDOZ)<br>* Seiten 1-3, ganz; Seite 4, mitte; Seiten 14,15; Beispiel 7 *<br>-- | 1,2,8-10 |
| A | FR - A - 2 228 820 (BAYER)<br>* Seite 1, ganz *<br>& DE - A - 2 325 088<br>-- | 1,2,8-10 |
| A | US - A - 3 898 033 (McLEOD)<br>* Spalte 2, Formel I; Spalte 3, Absatz 3 *<br>-- | 1,2,8-10 |
| A | DE - A - 2 629 674 (CIBA-GEIGY)<br>* Seite 6, Beispiel 4 *<br>-- | 1,2,8-10 |
| A | GB - A - 1 477 161 (ICI)<br>* Seite 1, Zeilen 1-35 *<br>---- | 1,3,8-10 |

KLASSIFIKATION DER ANMELDUNG (Int. Cl.)

C 09 B 33/056//
D 06 P 1/06
C 09 D 11/16
D 21 H 1/46
B 27 K 5/02

RECHERCHIERTE SACHGEBIETE (Int. Cl.)

C 09 B 33/04-
33/056
43/14

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 08.05.1981 | GREEN |